# EUROPEAN PATENT SPECIFICATION

(11) **EP 4 020 353 B1**
(45) Date of publication and mention of the grant of the patent: **08.05.2024**
(21) Application number: 21215333.2
(22) Date of filing: 16.12.2021
(51) Int. Cl.: G06Q 10/20

(54) **APPARATUS, METHOD, AND PROGRAM**
VORRICHTUNG, VERFAHREN UND PROGRAMM
APPAREIL, PROCÉDÉ ET PROGRAMME

(30) Priority: 28.12.2020 JP 2020219611
(43) Date of publication of application: 29.06.2022
(73) Proprietor: Yokogawa Electric Corporation, Tokyo 180-8750 (JP)
(72) Inventor: AKISADA, Yukiyo, Tokyo, 180-8750 (JP); SAKURAI, Yasuki, Japan, 80-8750 (JP); TAKENAKA, Azusa, Tokyo, 180-8750 (JP)
(74) Representative: Zinkler, Franz

(56) References cited:
- US-A1- 2019 362 243

## Description

### BACKGROUND

### 1. TECHNICAL FIELD

The present invention relates to an apparatus, a method, and a program.

### 2. RELATED ART

Patent Document 1 discloses that "an electronic device may include a line of sight detection unit that detects a line of sight of a user, and a control unit may acquire an area in a web page to which the user pays attention based on the line of sight information of the user acquired from the line of sight detection unit. [Patent Document 1] Japanese Patent Application Publication No. 2015-191551 US2019362243 discloses a system for supporting work of a worker.

### SUMMARY

A first aspect of the present invention provides an apparatus. The apparatus may include a storage unit configured to store, for each of a plurality of pieces of work to be performed by a worker, an area to be seen by the worker when the work is performed.
The apparatus may include a detection unit configured to detect each area seen by the worker. The apparatus may include a determination unit configured to determine whether each area stored by the storage unit is detected by the detection unit.

The determination unit may determine, for each work, whether an area corresponding to the work is detected by the detection unit.

The apparatus may include an input unit configured to receive, from the worker, an input operation of a work completion, for each of the plurality of pieces of work. The apparatus may include an input control unit configured to approve, for each of the plurality of pieces of work, an input by the input unit according to the determination unit determining that an area corresponding to the work is detected.

The storage unit may further store order of the work to be performed, for each of the plurality of pieces of work. The input control unit may approve, for each of the plurality of pieces of work, an input by the input unit according to the determination unit determining that another work, which is to be completed before the work, is completed and that an area corresponding to the work is detected.

The apparatus may include an extraction unit configured to extract an area which is not detected by the detection unit from among a plurality of areas stored by the storage unit. The apparatus may include a notification unit configured to notify the worker that work, which corresponds to the area extracted by the extraction unit, is not performed.

The area to be seen by the worker may be an installation area of a device.

A second aspect of the present invention provides a method. The method may include storing, for each of a plurality of pieces of work to be performed by a worker, an area to be seen by the worker when the work is performed. The method may include detecting each area seen by the worker. The method may include determining whether each area stored in the storing is detected in the detecting.

A third aspect of the present invention provides a program. The program may cause a computer to function as a storage unit configured to store, for each of a plurality of pieces of work to be performed by a worker, an area to be seen by the worker when the work is performed. The program may cause a computer to function as a detection unit configured to detect each area seen by the worker. The program may cause a computer to function as a determination unit configured to determine whether each area stored by the storage unit is detected by the detection unit.

The summary clause does not necessarily describe all necessary features of the embodiments of the present invention. The present invention may also be a sub-combination of the features described above.

### BRIEF DESCRIPTION OF THE DRAWINGS

Fig. 1 shows a maintenance management system 1 according to the present embodiment.
Fig. 2 shows a determination apparatus 17.
Fig. 3 shows an operation of the determination apparatus 17.
Fig. 4 shows a display screen.
Fig. 5 shows an example of a computer 2200 in which a plurality of aspects of the present invention may be embodied entirely or partially.

### DESCRIPTION OF EXEMPLARY EMBODIMENTS

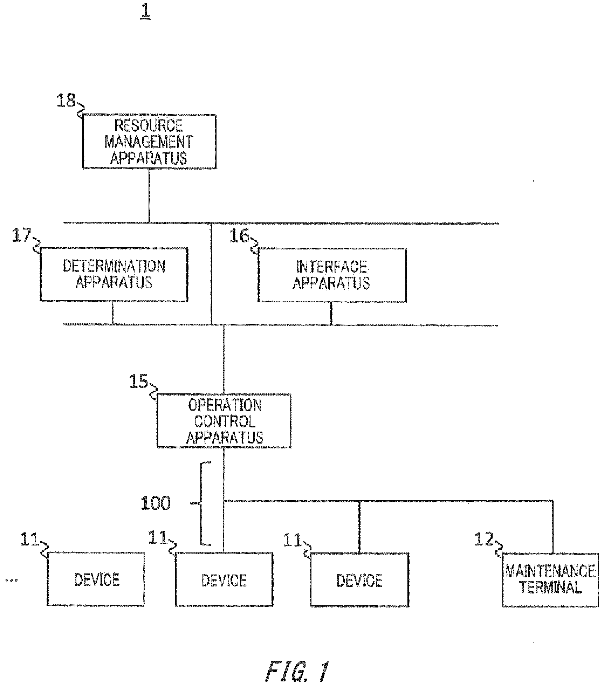

Fig. 1 shows a maintenance management system 1 according to the present embodiment. The maintenance management system 1 performs maintenance management of a plant, and includes a plurality of devices 11, a maintenance terminal 12, an operation control apparatus 15, an interface apparatus 16, a determination apparatus 17, and a resource management apparatus 18.

An example of the plant includes: in addition to industrial plants relating to chemistry and the like, plants for managing and controlling wellheads in a gas field, an oil field, and the like, and their surroundings; plants for managing and controlling power generation of hydroelectric power, thermal power, nuclear power, and the like; plants for managing and controlling energy harvesting from solar power, wind power, and the like; plants for managing and controlling water and sewerage, dams, and the like; and the like. Some of the plurality of devices 11, and the maintenance terminal 12 may be arranged at a field site where a process is executed in the plant. For example, at the field site, there exist a pipe through which a fluid to be measured is caused to flow, and a flow meter or the like which is installed in the pipe to measure a flow rate of the fluid. The operation control apparatus 15, some other of the plurality of devices 11, the interface apparatus 16, the determination apparatus 17, and the resource management apparatus 18 may be arranged in a management center of the plant.

The plurality of devices 11 are each equipment, a machine, or an apparatus, and for example, may be: a sensor that measures a physical quantity such as a pressure, a temperature, a pH, a speed, or a flow rate in the process in the plant; may be an actuator, which controls any of the physical quantities, such as a valve, a flow control valve, an opening and closing valve, a pump, a fan, a motor, a heating device, and a cooling device; may be an acoustic device such as a microphone or a speaker that collects an abnormal noise or the like in the plant or emits a warning sound or the like; may be a location detection device that outputs location information of each device 11; may be a pipe through which a fluid is caused to flow; may be a switch, a camera, a PC (a personal computer), or the like, which is arranged on an inside of the management center or the like; or may be another device. Each device 11 among the plurality of devices 11 may be of a type different from each other, or two or more of at least some of the devices 11 may be of the same type.

At least some of the plurality of devices 11 may be connected to the operation control apparatus 15 via a control network 100 in a wired or wireless manner. A communication in the control network 100 may be a digital communication, may be a hybrid communication in which a digital signal is superimposed on an analog signal (a signal at 4 to 20 mA or the like), or may be at a speed of approximately 1000 bps to 10000 bps (as one example, 1200 bps, 2400 bps). The communication in the control network 100 may be performed, for example, by a wireless communication protocol of ISA (International Society of Automation: International Society of Automation), and may be performed, as one example, by ISA100, HART (Highway Addressable Remote Transducer) (registered trademark), BRAIN (registered trademark), FOUNDATION Fieldbus, PROFIBUS, or the like.

Each device 11 may have unique identification information (also referred to as device specific information). The device specific information is information for uniquely identifying the device 11, and may be, as one example in the present embodiment, at least one of a serial number assigned to the device 11 by a communication protocol (the HART as one example), a serial number set by a manufacturer of the device 11, and a device ID given by the user.

The maintenance terminal 12 accesses configuration parameters of some of the plurality of devices 11 to refer to, set, and change values of the configuration parameters, and the like. The maintenance terminal 12 may be a handheld terminal (HHT) (as one example, a smartphone or a tablet PC) carried by a field site worker, or may be a stationary PC. When the maintenance terminal 12 is the handheld terminal, the maintenance terminal 12 may be connected to the device 11 in an attachable and detachable manner.

The operation control apparatus 15 communicates with some of the plurality of devices 11 to control the process. For example, the operation control apparatus 15 acquires a process value which is measurement data from the device 11 that is the sensor, and drives the device 11 that is the actuator. Then, the operation control apparatus 15 may supply the process value to the interface apparatus 16, and receive a target value of the process value from the interface apparatus 16. Note that as one example in the present embodiment, a description is made that the maintenance management system 1 is provided with one operation control apparatus 15 to control the plurality of devices 11; however, a plurality of operation control apparatuses 15 may be provided to respectively perform distributed controls on some of the devices 11. The operation control apparatus 15 may be, as one example, an FCS (Field Control Station).

The interface apparatus 16 displays various types of data in the plant on a display screen to interface between the worker and the plant. The interface apparatus 16 may control the process of the plant via the operation control apparatus 15 according to the operation by the worker. For example, the interface apparatus 16 may receive the process value from the operation control apparatus 15, and supply the target value of the process value to the operation control apparatus 15. In addition, the interface apparatus 16 may change a value of the configuration parameter of the device 11 via the operation control apparatus 15. In addition, the interface apparatus 16 may store the value of the configuration parameter of the device 11 in association with at least some of the devices 11. The interface apparatus 16 may be a HIS (Human Interface Station) as one example, or may be constituted by a PC or the like.

The determination apparatus 17 is one example of an apparatus, and makes various determinations about work in the plant. For example, the determination apparatus 17 may detect an area which is seen by the worker, and determine whether a predetermined work is performed by the worker in the plant. The determination apparatus 17 may be constituted, as one example, by a wearable device such as an eye tracker having a line of sight detection function, a PC, a camera, or the like. In the present embodiment, the determination apparatus 17 is communicably connected to the devices 11, the resource management apparatus 18, the interface apparatus 16, the operation control apparatus 15, the maintenance terminal 12, or the like in the plant (hereinafter, also referred to as an external apparatus); however, the determination apparatus 17 may not be connected to the external apparatus.

The resource management apparatus 18 performs online monitoring and centralized management of the plant. For example, the resource management apparatus 18 may manage data or the like (as one example, the value of the configuration parameter or the process value) of the device 11, which is acquired by the operation control apparatus 15. The resource management apparatus 18 may be, as one example, constituted by a PC or the like.

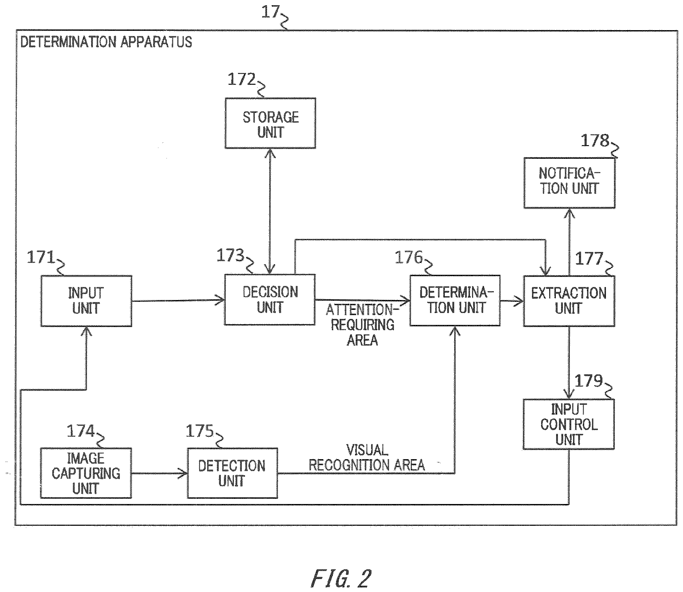

Fig. 2 shows a determination apparatus 17. The determination apparatus 17 has an input unit 171, a storage unit 172, a decision unit 173, an image capturing unit 174, a detection unit 175, a determination unit 176, an extraction unit 177, a notification unit 178, and an input control unit 179.

The input unit 171 receives an input relating to the work from the worker or the external apparatus. The input unit 171 may receive, from the worker, an input operation of a work completion for each of a plurality of pieces of work. The input unit 171 may receive, from the worker, an input which indicates a predetermined situation relating to the work or the plant. The input unit 171 may receive the various types of data from the external apparatus existing in the plant in a wired or wireless manner. The input unit 171 may include at least one of a keyboard, a touch panel, a communication terminal, a button, and the like. The input unit 171 may supply input contents to the decision unit 173.

Here, the situation may include at least one of an entry and exit of the worker in a predetermined space (as one example, a building or a room such as the management center), a fact that a predetermined time comes, a detection of an abnormality in the process value of the device 11 of the plant, and the like.

The work may be an operation to be performed by the worker in each situation. The work may include, as one example, at least one of turning on or turning off power of the device 11, opening or closing a window, exiting a predetermined area, entering a predetermined area, various operations of the device 11, checking at least a part of an area in a display screen of the device 11, and confirming whether these operations are performed.

For each of the plurality of pieces of work to be performed by the worker, the storage unit 172 stores one or more areas (also referred to as an attention-requiring area) to be seen by the worker when the work is performed. The storage unit 172 may store, in advance, data which is input from the worker or the like via the input unit 171. The data may include situation data indicating each situation of the work to be performed, work data indicating each work, and area data indicating each attention-requiring area. The storage unit 172 may further store order of the work to be performed, for each of the plurality of pieces of work. The storage unit 172 may store the situation, the work, the order of the work, and the attention-requiring area for each work in association with each other. The storage unit 172 may have a table for the association.

Here, the attention-requiring area may be an installation area of device 11 existing in the plant, an area surrounded by a coordinate range inside the management center or the like, or an area surrounded by a coordinate range of a display screen of the external apparatus or the determination apparatus. The area data of the attention-requiring area may be at least one of the coordinate range and the device specific information of the device 11. In addition, the attention-requiring area may be any window of a plurality of windows in the display screen. In this case, the area data of the attention-requiring area may indicate the coordinate range in the display screen, or may indicate any window.

The decision unit 173 decides, for each of the plurality of pieces of work to be performed by the worker, an area to be seen by the worker when the work is performed. The decision unit 173 may decide the plurality of pieces of work based on the situation which is input from the input unit 171. The decision unit 173 may acquire, from the storage unit 172, the work data indicating the plurality of pieces of work and the area data indicating the attention-requiring area. The decision unit 173 may supply the area data to the determination unit 176, and supply the work data and the area data to the extraction unit 177. The decision unit 173 may supply the various types of data to the extraction unit 177 along with the input contents of the input unit 171.

The image capturing unit 174 captures an image of the worker. The image capturing unit 174 may capture the image of a part of the worker (an eyeball, a head, or the like). The image capturing unit 174 may be a wearable device of a glasses type, a camera provided on an outer periphery portion of the display screen of the determination apparatus 17 or the external apparatus, or a surveillance camera or the like provided on a ceiling or a wall of the management center or the like. The image capturing unit 174 supplies captured data to the detection unit 175.

The detection unit 175 detects each area (also referred to as a visual recognition area) seen by the worker. The detection unit 175 may detect the area seen by the worker by detecting a line of sight of the worker. The detection unit 175 may detect the line of sight by analyzing the image supplied from the image capturing unit 174. The detection unit 175 may detect a point of gaze of both eyes from the image of the eyeball, and detect, as the line of sight of the worker, a straight line which connects a middle point of both eyes and the point of gaze of the worker. The detection unit 175 may detect an orientation of the head of the worker from positions of the eyes, nose, mouth, or the like of the worker, and detect, as the line of sight of the worker, a straight line of the detected orientation. The detection unit 175 may set, as the visual recognition area, the detected area on the line of sight. The detection unit 175 may further detect a location of the worker from a GPS or the image, and detect the visual recognition area from the location.

The detection unit 175 may further detect the area which is seen by the worker in the display screen of the device 11. The detection unit 175 may detect an intersection of the line of sight of the worker and the display screen as a position which is seen by the worker in the display screen, and detect an area including this position as the visual recognition area. The detection unit 175 may supply, to the determination unit 176, the area data indicating the visual recognition area. The area data supplied by the detection unit 175 may be in the same format as the area data of the attention-requiring area stored in the storage unit 172.

Here, the visual recognition area may be an area surrounded by the coordinate range. In addition, the visual recognition area may be any window when the plurality of windows are displayed on the display screen of the external apparatus or the determination apparatus. In this case, the area data of the visual recognition area may indicate the coordinate range in the display screen, or may indicate any window. The visual recognition area may be an area narrower than the attention-requiring area, may be an area having the same width as the attention-requiring area, or may be an area wider than the attention-requiring area.

The determination unit 176 determines whether each attention-requiring area stored by the storage unit 172 is detected by the detection unit 175. The determination unit 176 may determine, for each work, whether the attention-requiring area corresponding to the work is detected by the detection unit 175. When at least a part of the visual recognition area supplied from the detection unit 175 matches at least a part of the attention-requiring area, the determination unit 176 may determine that the attention-requiring area is detected by the detection unit 175. The determination unit 176 may supply the extraction unit 177 with a determination result indicating the attention-requiring area (also referred to as a detected attention-requiring area) detected by the detection unit 175. For example, the determination unit 176 may supply the extraction unit 177 with the area data of the detected attention-requiring area.

The extraction unit 177 extracts an area which is not detected by the detection unit 175 (also referred to as an undetected attention-requiring area) from among a plurality of attention-requiring areas stored by the storage unit 172. The extraction unit 177 may supply the notification unit 178 with at least one of the area data of the undetected attention-requiring area and the work data of the work corresponding to the undetected attention-requiring area. After supplying the notification unit 178 with the data of the undetected attention-requiring area, and in a case of receiving the area data of the undetected attention-requiring area from the determination unit 176 (that is, a case where the determination unit 176 determines that the undetected attention-requiring area is seen by the worker), the extraction unit 177 may supply the notification unit 178 with a signal indicating that the work, which corresponds to the undetected attention-requiring area, is performed. The extraction unit 177 may supply the input control unit 179 with a signal indicating that all the attention-requiring areas are detected for each work or for each situation.

The notification unit 178 notifies the worker that the work, which corresponds to the area extracted by the extraction unit 177, is not performed. The notification unit 178 may notify the worker of the work which corresponds to the undetected attention-requiring area received from the extraction unit 177. The notification unit 178 may provide the notification to the worker by at least one of a voice, a display, a vibration, and the like. For example, the notification unit 178 may have a display screen, and may display, on the display screen, the undetected attention-requiring area or the work corresponding to the undetected attention-requiring area.

The input control unit 179 controls the input unit 171 according to the determination result of the determination unit 176. The input control unit 179 approves, for each of the plurality of pieces of work, the input of the work completion by the input unit 171 according to the determination unit 176 determining that the area corresponding to the work is detected. The input control unit 179 may approve, for each of the plurality of pieces of work, the input by the input unit 171 according to the determination unit 176 determining that another work, which is to be completed before the work, is completed and that the area corresponding to the work is detected. The input control unit 179 may approve the input by the input unit 171 when all the attention-requiring areas are detected for each situation or for each work. As one example, when it is determined that all or some of the attention-requiring areas for the plurality of pieces of work in one situation are detected, the input control unit 179 may transmit an approval signal to the input unit 171, and approve the next input.

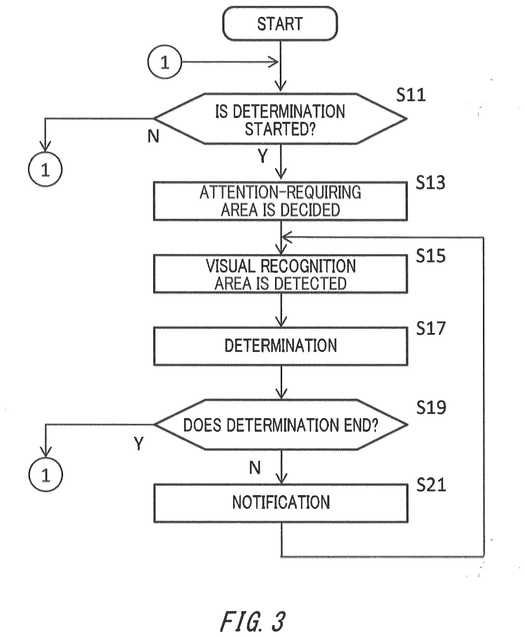

Fig. 3 shows an operation of the determination apparatus 17. The determination apparatus 17 supports the maintenance management of the plant by performing processing of step S11 to step S21. Note that this operation may be started in response to a start of the plant.

In step S11, the determination apparatus 17 determines whether a condition for starting the determination is satisfied. The determination apparatus 17 may start the determination operation when the worker inputs a predetermined situation via the input unit 171. In addition, the determination apparatus 17 may start the determination operation when receiving a signal that provides an instruction to start the determination from the external apparatus existing in the plant via the input unit 171. In addition, the determination apparatus 17 may start the determination operation when a predetermined time comes or when the power of the determination apparatus 17 is turned on. If the condition for starting the determination is satisfied (step S11; Y), the processing may proceed to step S13. If the condition for starting the determination is not satisfied (step S11; N), the processing may wait until the condition is satisfied.

In step S13, the decision unit 173 decides the attention-requiring area. As one example, when receiving, from the input unit 171, data indicating a situation of leaving a "room a" of a "building B" of the plant, the decision unit 173 accesses the storage unit 172 and acquires one or more pieces of work data and area data which are associated with leaving the room. In this case, as one example, the work may be turning off the power of the device 11 (lighting, the PC, or the like.) in the room a, closing a door of the room a by the worker, and seeing a specific area of the display screen of the device 11 in the room a. The attention-requiring area corresponding to the work may be the installation area of the device 11 of which the power is to be turned off, the door of the room a, or a specific window in the display screen.

In step S15, the detection unit 175 detects the line of sight of the worker from the data supplied from the image capturing unit 174, and detects the visual recognition area.

In step S17, the determination unit 176 determines whether the attention-requiring area is seen by the worker. As one example in the present embodiment, the determination unit 176 may determine whether the attention-requiring area and the visual recognition area match with each other. When one attention-requiring area matches the visual recognition area multiple times, the determination unit 176 may indicate, each time the match is made, to the extraction unit 177 that the attention-requiring area is detected.

As one example in the present embodiment, the fact that the attention-requiring area is seen may mean the attention-requiring area is seen at least once in a first reference time width (one minute as one example) up to the present time. The fact that the attention-requiring area is seen once may mean that a state in which the line of sight is positioned in the attention-requiring area continues for a second reference time width (0.5 seconds as one example). Such a second reference width may be a period which is different for each of the plurality of attention-requiring areas, and in this case, the storage unit 172 may store the first reference width in association with the attention-requiring area.

When there are the plurality of attention-requiring areas, the determination unit 176 may determine whether each of the plurality of attention-requiring areas is seen. The fact that each of the plurality of attention-requiring areas is seen may mean that each attention-requiring area is seen at least once in the first reference time width up to the present time.

In step S19, the extraction unit 177 extracts the work corresponding to the undetected attention-requiring area. The extraction unit 177 may compare the area data of the plurality of attention-requiring areas received from the decision unit 173 with the detected attention-requiring areas received from the determination unit 176, and extract the attention-requiring area which is not detected by the detection unit 175.

As one example, the extraction unit 177 may extract the undetected attention-requiring area from among the plurality of attention-requiring areas corresponding to the situation during a period of a third reference width (ten minutes as one example) from the input of the situation (the start of the determination operation). After the period of the third reference width elapses from the input of one situation, the extraction unit 177 may supply the notification unit 178 with the area data of the undetected attention-requiring area (or the work data corresponding to the area data). After supplying the notification unit 178 with the area data of the undetected attention-requiring area, in a case of receiving, from the determination unit 176, the signal (the area data) indicating that the undetected attention-requiring area is detected (seen by the worker), the extraction unit 177 may supply the notification unit 178 with the signal indicating that the undetected attention-requiring area is detected. Here, the third reference width may be the same as or different from the first reference width. The third reference width may be a period which is different for each situation, and in this case, the storage unit 172 may store the third reference width in association with each situation.

In addition, the extraction unit 177 may determine whether the plurality of pieces of work are performed in order of the plurality of pieces of work to be performed for each work or for each situation. The extraction unit 177 may determine whether the attention-requiring area corresponding to the work is detected in order of the plurality of pieces of work to be performed. The extraction unit 177 may determine that the attention-requiring area, which is detected in different order, is undetected. As one example, in a case where three pieces of work A, B, C are to be performed in order, when the determination unit determines that the attention-requiring areas are detected in order of the attention-requiring area a corresponding to the work A, the attention-requiring area c corresponding to the work C, and the attention-requiring area b corresponding to the work B, the extraction unit 177 may set the attention-requiring area c to be undetected.

In addition, when a plurality of situations are input to the input unit 171, the extraction unit 177 may determine whether one or more pieces of work are performed in order of inputting the situations or in order predetermined for the situations. As one example, when the two situations I, II are input to the input unit 171 in order, the extraction unit 177 may extract the undetected attention-requiring area for situation II, with respect to the attention-requiring areas detected after all pieces of work corresponding to situation I, which is a first situation, are completed (that is, the attention-requiring areas corresponding to all the pieces of work are detected or there are inputs of work completions for all the pieces of work).

When the extraction unit 177 determines that all the attention-requiring areas corresponding to the input situations are detected (step S19; Y), the processing may proceed to step S11. When it is determined that at least a part of the attention-requiring area is not detected (step S19; N), the processing may proceed to step S21.

In step S21, on the display screen of the determination apparatus 17 or the external apparatus of the plant, the notification unit 178 may display at least one of the fact that there is the undetected attention-requiring area extracted by the extraction unit 177, the range of the undetected attention-requiring area, and the work corresponding to the undetected attention-requiring area.

When the undetected attention-requiring area is a specific area of the display screen of the determination apparatus 17 or the display screen of the external apparatus, as one example, the notification unit 178 may indicate the undetected attention-requiring area by changing at least one of a display position, a display color, brightness, and a display size in each area of the display screen, or a character decoration of text, the display color, or the display size in each area. When a display mode of the attention-requiring area is changed, the notification unit 178 may return the display mode of the attention-requiring area to the state before the change according to the attention-requiring area and the visual recognition area matching with each other.

The notification unit 178 may end the notification operation in response to receiving, from the extraction unit 177, the signal indicating that the undetected attention-requiring area is detected, or in response to the worker inputting the work completion to the input unit 171.

In step S21, when receiving, from the extraction unit 177, the signal indicating that all the attention-requiring areas are detected for each situation or for each work, the input control unit 179 approves the input of the work completion by the worker. The input control unit 179 may not make the input from the input unit 171 be possible until the signal is received. As one example, when receiving the signal, the input control unit 179 may approve the input by switching a work completion button in the input unit 171 from a non-display to a display or by highlighting the work completion button.

The determination apparatus 17 may return to step S15, and detect the visual recognition area after the notification by the notification unit 178 or during the continuous notification.

With the above operation, it is possible to determine, from the line of sight, whether the worker performs the work which is determined according to the situation, and to make the worker surely perform the work.

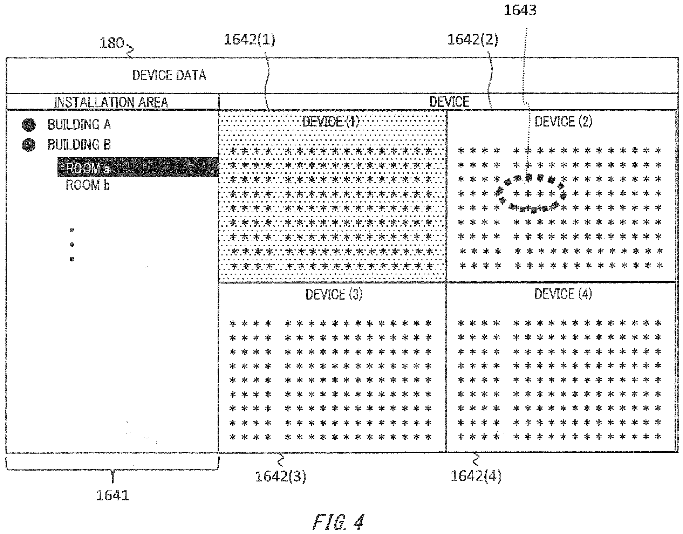

Fig. 4 shows a display screen 180 which is one example of an attention-requiring area. The display screen 180 may be the display screen of the determination apparatus 17 or the display screen of the external apparatus in the plant. In this case, the image capturing unit 174 may be provided at an end portion of the display screen 180 to capture, for a line of sight detection, the image of the eyes or the like of the worker who sees the display screen 180.

On the display screen 180, the process values of some devices 11, which are selected by the worker from among the respective devices 11 in the plant, may be displayed. For example, the display screen 180 may be provided with a selection area 1641 for selecting the installation area of the device 11 in the plant, and a data display area 1642 for displaying the process value of each device 11 belonging to the selected installation area. When the abnormality occurs in the process value of any of the devices 11 and the determination apparatus 17 determines that the area to be seen is not seen by the worker, the notification unit 178 may change the display mode of the data display area 1642 of the process value.

As one example in this drawing, in the selection area 1641, buildings and rooms in the plant are displayed as options for the installation area of the device 11, and the "room a" of the "Building B" is selected, and in the data display areas 1642 (1) to 1642 (4), history of process values of a "device (1)" to a "device (4)", which are installed in the installation areas, is displayed. In addition, in a state in which the J abnormality occurs in the process value of the "device (1)" and the data display area 1642 (1) thereof is set as the attention-requiring area, a visual recognition area 1643 of the worker is positioned in the data display area 1642 (2), and thus a background color of the data display area 1642 (1) is changed by a control of the notification unit 178.

The image capturing unit 174 may be attached to the worker (for example, the head, a shoulder, or the like), and capture an image in a direction in which the worker faces. For example, the image capturing unit 174 may capture an image of a code or the like (as one example, a barcode, a QR code (registered trademark)) attached to the device 11, and the detection unit 175 may recognize the device 11 by the code, and the determination unit 176 may determine that the attention-requiring area corresponding to the device 11 is detected by the detection unit 175.

In addition, the determination apparatus 17 may not have the image capturing unit 174, and in this case, the detection unit 175 may receive the data for detecting the line of sight of the worker from an external device (for example, the wearable device, the camera, or the like).

In addition, the determination apparatus 17 may be a part of the device 11, the resource management apparatus 18, the interface apparatus 16, the operation control apparatus 15, or the maintenance terminal 12 in the plant.

In addition, various embodiments of the present invention may be described with reference to flowcharts and block diagrams whose blocks may represent (1) steps of processes in which operations are executed or (2) sections of apparatuses responsible for executing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), and the like.

A computer-readable medium may include any tangible device that can store instructions to be executed by a suitable device, and as a result, the computer-readable medium having instructions stored thereon comprises an article of manufacture including instructions which can be executed to create means for executing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk(registered trademark), JAVA(registered trademark), C++, etc., and conventional procedural programming languages, such as the "C" programming language or similar programming languages.

Computer-readable instructions may be provided to a processor of a general-purpose computer, special purpose computer, or other programmable data processing apparatus, or to programmable circuitry, locally or via a local area network (LAN), wide area network (WAN) such as the Internet, etc., so that the computer-readable instructions are executed to create means for executing operations specified in the flowcharts or block diagrams. Examples of the processor include a computer processor, a processing unit, a microprocessor, a digital signal processor, a controller, a microcontroller, and the like.

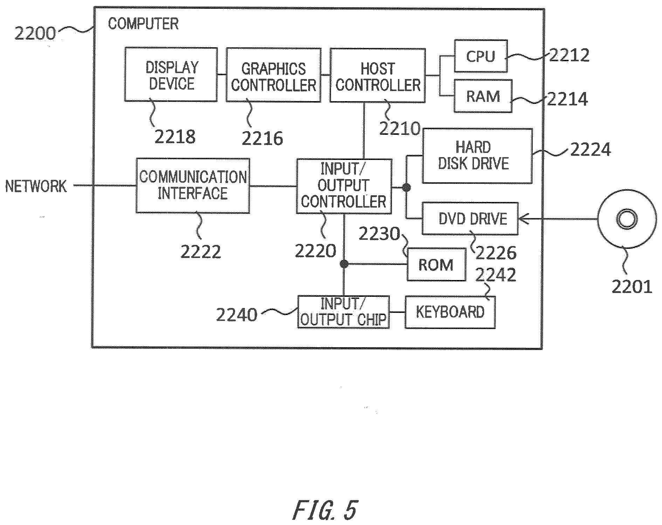

Fig. 5 shows an example of a computer 2200 in which a plurality of aspects of the present invention may be embodied entirely or partially. A program that is installed in the computer 2200 can cause the computer 2200 to function as operations associated with apparatuses according to the embodiments of the present invention or one or more sections of the apparatuses thereof, or can cause the computer 2200 to execute the operations or the one or more sections thereof, and/or can cause the computer 2200 to execute processes of the embodiments according to the present invention or steps of the processes thereof. Such a program may be executed by a CPU 2212 to cause the computer 2200 to execute certain operations associated with some or all of the blocks of flowcharts and block diagrams described herein.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads the program and data from an IC card, and/or writes the program and data to the IC card.

The ROM 2230 stores, in itself, a boot program or the like that is executed by the computer 2200 during activation, and/or a program that depends on hardware of the computer 2200. The input/output chip 2240 may also connect various input/output units to the input/output controller 2220 via a parallel port, a serial port, a keyboard port, a mouse port, and the like.

A program is provided by a computer-readable medium such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. The information processing written in these programs is read into the computer 2200, resulting in cooperation between a program and the above-mentioned various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and execute various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored on the computer 2200 or in the computer-readable medium near the computer 2200. In addition, a recording medium such as a hard disk or a RAM provided in a server system connected to a dedicated communication network or the Internet can be used as the computer-readable medium, thereby providing the program to the computer 2200 via the network.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1 maintenance management system
11 device
12 maintenance terminal
15 operation control apparatus
16 interface apparatus
17 determination apparatus
18 resource management apparatus
100 control network
171 input unit
172 storage unit
173 decision unit
174 image capturing unit
175 detection unit
176 determination unit
177 extraction unit
178 notification unit
179 input control unit
180 display screen
2200 computer
2201 DVD-ROM
2210 host controller
2212 CPU
2214 RAM
2216 graphics controller
2218 display device
2220 input/output controller
2222 communication interface
2224 hard disk drive
2226 DVD-ROM drive
2230 ROM
2240 input/output chip
2242 keyboard

## Claims

1. An apparatus comprising:
a storage unit (172) configured to store, in association with each of a plurality of pieces of work to be performed by a worker, an attention-requiring area to be seen by the worker when the work is performed;
a detection unit (175) configured to detect each area seen by the worker;
a determination unit (176) configured to determine whether each attention-requiring area stored by the storage unit (172) is detected by the detection unit (175);
an extraction unit (177) configured to extract an undetected attention-requiring area which is not detected by the detection unit (175) from among a plurality of attention-requiring areas stored by the storage unit (172); and
a notification unit (178) configured to notify the worker that work, which corresponds to the undetected attention-requiring area extracted by the extraction unit (177), is not performed,
wherein the extraction unit (177) is configured to supply the notification unit (178) with a signal indicating that the work, which corresponds to the attention-requiring area, is performed, in a case where the determination unit (176) determines that the attention-requiring area is seen by the worker.

2. The apparatus according to claim 1, wherein
the determination unit (176) is configured to determine, for each work, whether an area corresponding to the work is detected by the detection unit (175).

3. The apparatus according to claim 1 or 2, further comprising:
an input unit (171) configured to receive, from the worker, an input operation of a work completion, for each of the plurality of pieces of work; and
an input control unit (179) configured to approve, for each of the plurality of pieces of work, an input by the input unit (171) according to the determination unit (176) determining that an area corresponding to the work is detected.

4. The apparatus according to claim 3,
wherein
the storage unit (172) is configured to further store order of the work to be performed, for each of the plurality of pieces of work, and
the input control unit (179) is configured to approve, for each of the plurality of pieces of work, an input by the input unit (171) according to the determination unit (176) determining that another work, which is to be completed before the work, is completed and that an area corresponding to the work is detected.

5. The apparatus according to any one of claims 1 to 4, wherein
the attention-requiring area to be seen by the worker is an installation area of a device.

6. The apparatus according to any one of claims 1 to 4, wherein
the attention-requiring area to be seen by the worker is an area surrounded by a coordinate range in indoors or an area surrounded by a coordinate range of a display screen,

7. The apparatus according to any one of claims 1 to 6, wherein
the storage unit (172) is configured to store situation data indicating each situation of the work to be performed, work data indicating each work, and area data indicating each attention-requiring area.

8. A method comprising:
storing, in association with each of a plurality of pieces of work to be performed by a worker, an attention-requiring area to be seen by the worker when the work is performed;
detecting each area seen by the worker;
determining whether each attention-requiring area stored in the storing is detected in the detecting;
extracting an undetected attention-requiring area which is not detected in the detecting from among a plurality of attention-requiring areas stored in the storing; and
notifying the worker that work, which corresponds to the undetected attention-requiring area extracted in the extracting, is not performed,
wherein the extracting includes supplying a signal indicating that the work, which corresponds to the attention-requiring area, is performed, in a case where it is determined that the attention-requiring area is seen by the worker.

9. A program that causes a computer to function as:
a storage unit (172) configured to store, in association with each of a plurality of pieces of work to be performed by a worker, an attention-requiring area to be seen by the worker when the work is performed;
a detection unit (175) configured to detect each area seen by the worker;
a determination unit (176) configured to determine whether each attention-requiring area stored by the storage unit (172) is detected by the detection unit (175);
an extraction unit (177) configured to extract an undetected attention-requiring area which is not detected by the detection unit (175) from among a plurality of attention-requiring areas stored by the storage unit (172); and
a notification unit (178) configured to notify the worker that work, which corresponds to the undetected attention-requiring area extracted by the extraction unit (177), is not performed,
wherein the extraction unit (177) is configured to supply the notification unit (178) with a signal indicating that the work, which corresponds to the attention-requiring area, is performed, in a case where the determination unit (176) determines that the attention-requiring area is seen by the worker.

10. A computer readable medium storing the program according to claim 9.

## Patentansprüche

1. Eine Vorrichtung, die folgende Merkmale aufweist:
eine Speichereinheit (172), die dazu konfiguriert ist, in Verbindung mit jedem einer Mehrzahl von Arbeitselementen, die von einem Arbeiter auszuführen sind, einen aufmerksamkeitserforderlichen Bereich, den der Arbeiter zu sehen hat, wenn die Arbeit ausgeführt wird, zu speichern;
eine Detektionseinheit (175), die dazu konfiguriert ist, jeden Bereich zu detektieren, den der Arbeiter sieht;
eine Bestimmungseinheit (176), die dazu konfiguriert ist, zu bestimmen, ob jeder aufmerksamkeitserforderliche Bereich, der von der Speichereinheit (172) gespeichert ist, von der Detektionseinheit (175) detektiert wird;
eine Extrahierungseinheit (177), die dazu konfiguriert ist, einen nicht-detektierten aufmerksamkeitserforderlichen Bereich, der nicht von der Detektionseinheit (175) detektiert wird, aus einer Mehrzahl von aufmerksamkeitserforderlichen Bereichen, die von der Speichereinheit (172) gespeichert werden, zu extrahieren; und
eine Benachrichtigungseinheit (178), die dazu konfiguriert ist, den Arbeiter zu benachrichtigen, dass eine Arbeit, die dem nicht-detektierten aufmerksamkeitserforderlichen Bereich entspricht, der von der Extrahierungseinheit (177) extrahiert wird, nicht ausgeführt wird,
wobei die Extrahierungseinheit (177) dazu konfiguriert ist, die Benachrichtigungseinheit (178) mit einem Signal zu versorgen, das angibt, dass die Arbeit, die dem aufmerksamkeitserforderlichen Bereich entspricht, ausgeführt wird, falls die Bestimmungseinheit (176) bestimmt, dass der aufmerksamkeitserforderliche Bereich von dem Arbeiter gesehen wird.

2. Die Vorrichtung gemäß Anspruch 1, wobei
die Bestimmungseinheit (176) dazu konfiguriert ist, für jede Arbeit zu bestimmen, ob ein Bereich, der der Arbeit entspricht, von der Detektionseinheit (175) detektiert wird,

3. Die Vorrichtung gemäß einem der Ansprüche 1 oder 2, die ferner Folgendes aufweist:
eine Eingabeeinheit (171), die dazu konfiguriert ist, von dem Arbeiter eine Eingabeoperation eines Arbeitsabschlusses für jedes der Mehrzahl von Arbeitselementen zu empfangen; und
eine Eingabesteuereinheit (179), die dazu konfiguriert ist, für jedes der Mehrzahl von Arbeitselementen eine Eingabe von der Eingabeeinheit (171) zu genehmigen, gemäß der Tatsache, dass die Bestimmungseinheit (176) bestimmt, dass ein Bereich, der der Arbeit entspricht, detektiert wird.

4. Die Vorrichtung gemäß Anspruch 3, wobei
die Speichereinheit (172) dazu konfiguriert ist, eine Reihenfolge der auszuführenden Arbeit für jedes der Mehrzahl von Arbeitselementen zu speichern, und
die Eingabesteuereinheit (179) dazu konfiguriert ist, für jedes der Mehrzahl von Arbeitselementen eine Eingabe von der Eingabeeinheit (171) zu genehmigen, gemäß der Tatsache, dass die Bestimmungseinheit (176) bestimmt, dass eine andere Arbeit, die vor der Arbeit abzuschließen ist, abgeschlossen ist, und dass ein Bereich, der der Arbeit entspricht, detektiert wird.

5. Die Vorrichtung gemäß einem der Ansprüche 1 bis 4, wobei
der aufmerksamkeitserforderliche Bereich, den der Arbeiter zu sehen hat, ein Installationsbereich einer Vorrichtung ist.

6. Die Vorrichtung gemäß einem der Ansprüche 1 bis 4, wobei
der aufmerksamkeitserforderliche Bereich, den der Arbeiter zu sehen hat, ein Bereich, der von einem Koordinatenbereich umgeben wird, in einem Innenraum oder ein Bereich, der von einem Koordinatenbereich umgeben wird, eines Anzeigebildschirmes ist.

7. Die Vorrichtung gemäß einem der Ansprüche 1 bis 6, wobei
die Speichereinheit (172) dazu konfiguriert ist, Situationsdaten, die jede Situation der auszuführenden Arbeit angeben, Arbeitsdaten, die jede Arbeit angeben, und Bereichsdaten, die jeden aufmerksamkeitserforderlichen Bereich angeben, zu speichern.

8. Ein Verfahren, das folgende Schritte aufweist:
Speichern, in Verbindung mit jedem einer Mehrzahl von Arbeitselementen, die von einem Arbeiter auszuführen sind, eines aufmerksamkeitserforderlichen Bereiches, den der Arbeiter zu sehen hat, wenn die Arbeit ausgeführt wird,;
Detektieren jedes Bereiches, den der Arbeiter sieht;
Bestimmen, ob jeder aufmerksamkeitserforderliche Bereich, der beim Speichern gespeichert wird, beim Detektieren detektiert wird;
Extrahieren eines nicht-detektierten aufmerksamkeitserforderlichen Bereiches, der nicht beim Detektieren detektiert wird, aus einer Mehrzahl von aufmerksamkeitserforderlichen Bereichen, die beim Speichern gespeichert werden; und
Benachrichtigen des Arbeiters, dass eine Arbeit, die dem nicht-detektierten aufmerksamkeitserforderlichen Bereich entspricht, der beim Extrahieren extrahiert wird, nicht ausgeführt wird,
wobei das Extrahieren ein Versorgen mit einem Signal umfasst, das angibt, dass die Arbeit, die dem aufmerksamkeitserforderlichen Bereich entspricht, ausgeführt wird, falls bestimmt wird, dass der aufmerksamkeitserforderliche Bereich von dem Arbeiter gesehen wird.

9. Ein Computerprogramm, das bewirkt, dass ein Computer als Folgendes fungiert:
eine Speichereinheit (172), die dazu konfiguriert ist, in Verbindung mit jedem einer Mehrzahl von Arbeitselementen, die von einem Arbeiter auszuführen sind, einen aufmerksamkeitserforderlichen Bereich, den der Arbeiter zu sehen hat, wenn die Arbeit ausgeführt wird, zu speichern;
eine Detektionseinheit (175), die dazu konfiguriert ist, jeden Bereich zu detektieren, den der Arbeiter sieht;
eine Bestimmungseinheit (176), die dazu konfiguriert ist, zu bestimmen, ob jeder aufmerksamkeitserforderliche Bereich, der von der Speichereinheit (172) gespeichert ist, von der Detektionseinheit (175) detektiert wird;
eine Extrahierungseinheit (177), die dazu konfiguriert ist, einen nicht-detektierten aufmerksamkeitserforderlichen Bereich, der nicht von der Detektionseinheit (175) detektiert wird, aus einer Mehrzahl von aufmerksamkeitserforderlichen Bereichen, die von der Speichereinheit (172) gespeichert werden, zu extrahieren; und
eine Benachrichtigungseinheit (178), die dazu konfiguriert ist, den Arbeiter zu benachrichtigen, dass eine Arbeit, die dem nicht-detektierten aufmerksamkeitserforderlichen Bereich entspricht, der von der Extrahierungseinheit (177) extrahiert wird, nicht ausgeführt wird,
wobei die Extrahierungseinheit (177) dazu konfiguriert ist, die Benachrichtigungseinheit (178) mit einem Signal zu versorgen, das angibt, dass die Arbeit, die dem aufmerksamkeitserforderlichen Bereich entspricht, ausgeführt wird, falls die Bestimmungseinheit (176) bestimmt, dass der aufmerksamkeitserforderliche Bereich von dem Arbeiter gesehen wird.

10. Ein computerlesbares Medium, das das Programm gemäß Anspruch 9 speichert.

## Revendications

1. Appareil comprenant:
une unité de mémoire (172) configurée pour mémoriser, en association avec chacune d'une pluralité de pièces de travail à effectuer par un travailleur, une zone nécessitant une attention devant être vue par le travailleur lorsque le travail est effectué;
une unité de détection (175) configurée pour détecter chaque zone vue par le travailleur;
une unité de détermination (176) configurée pour déterminer si chaque zone nécessitant une attention mémorisée par l'unité de mémoire (172) est détectée par l'unité de détection (175);
une unité d'extraction (177) configurée pour extraire une zone nécessitant une attention non détectée qui n'est pas détectée par l'unité de détection (175) parmi une pluralité de zones nécessitant une attention mémorisées par l'unité de mémoire (172); et
une unité de notification (178) configurée pour notifier au travailleur que le travail qui correspond à la zone nécessitant une attention non détectée extraite par l'unité d'extraction (177) n'est pas effectué,
dans lequel l'unité d'extraction (177) est configurée pour alimenter vers l'unité de notification (178) un signal indiquant que le travail qui correspond à la zone nécessitant une attention est effectué, au cas où l'unité de détermination (176) détermine que la zone nécessitant une attention est vue par le travailleur.

2. Appareil selon la revendication 1, dans lequel
l'unité de détermination (176) est configurée pour déterminer, pour chaque travail, si une zone correspondant au travail est détectée par l'unité de détection (175).

3. Appareil selon la revendication 1 ou 2, comprenant par ailleurs:
une unité d'entrée (171) configurée pour recevoir du travailleur une opération d'entrée d'un achèvement de travail, pour chacune de la pluralité de pièces de travail; et
une unité de commande d'entrée (179) configurée pour approuver, pour chacune de la pluralité de pièces de travail, une entrée par l'unité d'entrée (171) selon que l'unité de détermination (176) détermine qu'une zone correspondant au travail est détectée.

4. Appareil selon la revendication 3, dans lequel
l'unité de mémoire (172) est configurée pour mémoriser par ailleurs l'ordre du travail à effectuer, pour chacune de la pluralité de pièces de travail, et
l'unité de commande d'entrée (179) est configurée pour approuver, pour chacune de la pluralité de pièces de travail, une entrée par l'unité d'entrée (171) selon que l'unité de détermination (176) détermine qu'un autre travail, qui doit être terminé avant les travaux, est terminé et qu'une zone correspondant aux travaux est détectée.

5. Appareil selon l'une quelconque des revendications 1 à 4, dans lequel
la zone nécessitant une attention devant être vue par le travailleur est une zone d'installation d'un dispositif.

6. Appareil selon l'une quelconque des revendications 1 à 4, dans lequel
la zone nécessitant une attention devant être vue par le travailleur est une zone entourée par une plage de coordonnées à l'intérieur ou une zone entourée par une plage de coordonnées d'un écran d'affichage.

7. Appareil selon l'une quelconque des revendications 1 à 6, dans lequel
l'unité de mémoire (172) est configurée pour mémoriser les données de situation indiquant chaque situation du travail à effectuer, les données de travail indiquant chaque travail, et les données de zone indiquant chaque zone nécessitant une attention.

8. Procédé comprenant le fait de:
mémoriser, en association avec chacune d'une pluralité de pièces de travail devant être effectuées par un travailleur, une zone nécessitant une attention devant être vue par le travailleur lorsque le travail est effectué;
détecter chaque zone vue par le travailleur;
déterminer si chaque zone nécessitant une attention mémorisée dans le mémoire est détectée lors de la détection;
extraire une zone nécessitant une attention non détectée qui n'est pas détectée lors de la détection parmi une pluralité de zones nécessitant une attention mémorisées dans la mémoire; et
notifier au travailleur que le travail qui correspond à la zone nécessitant une attention non détectée extraite lors de l'extraction n'est pas effectué,
dans lequel l'extraction comporte le fait d'alimenter un signal indiquant que le travail qui correspond à la zone nécessitant une attention est effectué, au cas où il est déterminé que la zone nécessitant une attention est vue par le travailleur.

9. Programme qui fait fonctionner un ordinateur comme:
une unité de mémoire (172) configurée pour mémoriser, en association avec chacune d'une pluralité de pièces de travail à effectuer par un travailleur, une zone nécessitant une attention devant être vue par le travailleur lorsque le travail est effectué;
une unité de détection (175) configurée pour détecter chaque zone vue par le travailleur;
une unité de détermination (176) configurée pour déterminer si chaque zone nécessitant une attention mémorisée par l'unité de mémoire (172) est détectée par l'unité de détection (175);
une unité d'extraction (177) configurée pour extraire une zone nécessitant une attention non détectée qui n'est pas détectée par l'unité de détection (175) parmi une pluralité de zones nécessitant une attention mémorisées par l'unité de mémoire (172); et
une unité de notification (178) configurée pour notifier au travailleur que le travail qui correspond à la zone nécessitant une attention non détectée extraite par l'unité d'extraction (177) n'est pas effectué,
dans lequel l'unité d'extraction (177) est configurée pour alimenter vers l'unité de notification (178) un signal indiquant que le travail qui correspond à la zone nécessitant une attention est effectué, au cas où l'unité de détermination (176) détermine que la zone nécessitant une attention est vue par le travailleur.

10. Support lisible par ordinateur mémorisant le programme selon la revendication 9.
